# EUROPÄISCHE PATENTANMELDUNG

(11) **EP 0 917 219 A1**
(43) Veröffentlichungstag der Anmeldung: **19.05.1999**
(21) Anmeldenummer: 98116929.5
(22) Anmeldetag: 08.09.1998
(51) Int. Cl.: H01M 2/10, B65D 25/22

(54) **Griffsystem für Akkumulatoren**

(30) Priorität: 13.11.1997 DE 29720115 U
(71) Anmelder: Accumulatorenwerke Hoppecke Carl Zoellner & Sohn GmbH & Co. KG, 59929 Brilon (DE)
(72) Erfinder: Nann, Eberhard, Dr., 59494 Soest-Deiringsen (DE); Wulf, Ulrich, 59494 Soest (DE)
(74) Vertreter: Stenger, Watzke & Ring Patentanwälte

(57) **Zusammenfassung**

Mit der Erfindung wird ein Griffsystem für Akkumulatoren bereitgestellt, welches die Tragefunktion erfüllt, problemlos auch für auszutauschende Akkumulatoren, insbesondere für auszutauschende Akkumulatoren der Erstmontage, anwendbar ist, die Handhabbarkeit eines Akkumulators erheblich verbessert, insbesondere hinsichtlich einem einfachen Tragen und einer leichten Montage des Griffsystems, insbesondere ohne Verwendung zusätzlicher Werkzeuge oder Vorrichtungen, und darüber hinaus Beeinträchtigungen und Reduzierungen der Bedruckungsfläche des Deckels weitestgehend verhindert, so daß eine optimale Bedruckungsfläche des Deckels gegeben ist, welches Griffsystem dadurch gekennzeichnet ist, daß das Akkumulatorengehäuse wenigstens eine Aufnahme zur Befestigung eines lösbar anordbaren Tragelementes aufweist.

## Beschreibung

Die vorliegende Erfindung betrifft ein Griffsystem für Akkumulatoren, insbesondere für Starterbatterien.

Akkumulatoren bestehen aus zwei chemisch unterschiedlichen Elektroden, die in einem Gehäuse mit Deckel in einem meist flüssigen oder eingedickten Elektrolyten angeordnet sind. Bei den in der Regel für Kraftfahrzeuge verwendeten Bleiakkumulatoren bestehen die Elektroden aus Blei und sind gitterförmig ausgestaltet. Die Maschen des Gitters sind auf der positiven Seite mit Bleidioxid PbO₂ und auf der negativen Seite mit sogenanntem Bleischwamm, fein verteiltem, porösem Blei, gefüllt. Als Elektrolyt wird in der Regel Schwefelsäure H₂SO₄ verwendet. Bei Bleiakkumulatoren, insbesondere für Kraftfahrzeuge, sind mehrere Zellen hintereinandergeschaltet. Dabei ist jeweils eine Seite der Anfangszelle und eine Seite der Endzelle mit einem Pol zur Kontaktierung versehen, die jeweils den Deckel des Gehäuses durchragen. Bei den Ladevorgängen vollziehen sich chemische Reaktionen, die zur Gasentwicklung führen. Zur Entgasung weist der Akkumulator meist in seinem Deckel Gasauslaßöffnungen auf.

Akkumulatoren, insbesondere Starterbatterien für Kraftfahrzeuge und dergleichen, sind aufgrund ihrer Form und des im allgemeinen sehr hohen Gewichtes schwer handhabbar. Um die Handhabbarkeit von Akkumulatoren zu verbessern und insbesondere ein einfaches und leichtes Tragen der Akkumulatoren zu ermöglichen sind im Stand der Technik Akkumulatoren bekannt, die mit Griffen versehen sind, die bei Nichtbenutzung in die Oberfläche des Akkumulatorendeckels versenkbar sind und bei Benutzung aus einer Ruheposition in eine Tragposition gebracht werden können.

Nachteilig bei den aus dem Stand der Technik bekannten Griffen ist neben deren schlechten Handhabbarkeit insbesondere die durch die bekannten Griffe gegebene starke Beeinträchtigung und Reduzierung der zur Verfügung stehenden freien Bedruckungsfläche des Deckels. So lassen sich die im Stand der Technik bekannten Griffe nur für einen Akkumulator verwenden, insbesondere da diese fest am Akkumulator angeordnet sind. Ein Griff kann somit nicht nach Montage wieder gelöst werden und zum Tragen eines anderen Akkumulators genutzt werden. Darüber hinaus lassen sich die in die Oberfläche des Akkumulatorendeckels versenkbaren Griffe schwierig aus ihrer Ruheposition in ihre Tragposition bringen. Durch die in die Oberfläche des Akkumulatorendeckels versenkbaren Griffe wird die zur Verfügung stehende freie Bedruckungsfläche des Deckels sowohl durch die Griffe, als auch durch deren Befestigung bzw. Lagerung reduziert.

Ferner sind im Stand der Technik Akkumulatoren bekannt, die keinen Tragegriff aufweisen. Derartige Akkumulatoren werden beispielsweise im Automobilherstellerwerk bei der Montage eines Fahrzeuges mittels eines an speziellen an dem Akkumulatorengehäuse angebrachten Trageleisten angreifenden Roboters gehalten und an der im Fahrzeug vorgesehenen Stelle plaziert. Bei der Erstmontage derartiger Akkumulatoren wird somit kein Tragegriff benötigt. Bei einem späteren Austausch des Akkumulators, beispielsweise im Ersatzteilgeschäft, muß einerseits der neue Akkumulator vom Lager bzw. Geschäft zum Fahrzeug transportiert und in dieses eingebaut werden. Andererseits muß der auszutauschende Akkumulator aus dem Fahrzeug ausgebaut und zu einer Entsorgungsstelle transportiert werden. Transport und Einbau des neuen Akkumulators ist dabei meistens mittels Tragegriff gegeben, wohingegen der Transport und Ausbau des auszutauschenden Akkumulators der Erstmontage nur mit Hilfswerkzeugen und damit äußerst unsicher und schwierig möglich ist.

Der Erfindung liegt die **Aufgabe** zugrunde, ein Griffsystem für Akkumulatoren zu schaffen, welches die Tragefunktion erfüllt, problemlos auch für auszutauschende Akkumulatoren, insbesondere für auszutauschende Akkumulatoren der Erstmontage, anwendbar ist, die Handhabbarkeit eines Akkumulators erheblich verbessert, insbesondere hinsichtlich einem einfachen Tragen und einer leichten Montage des Griffsystems, insbesondere ohne Verwendung zusätzlicher Werkzeuge oder Vorrichtungen, und darüber hinaus Beeinträchtigungen und Reduzierungen der Bedruckungsfläche des Deckels weitestgehend verhindert, so daß eine optimale Bedruckungsfläche des Deckels gegeben ist.

Zur technischen **Lösung** wird ein Griffsystem für Akkumulatoren vorgeschlagen, das dadurch gekennzeichnet ist, daß das Akkumulatorengehäuse wenigstens eine Aufnahme zur Befestigung eines lösbar anordbaren Tragelementes aufweist.

Durch das erfindungsgemäße Griffsystem wird die Handhabbarkeit eines Akkumulators erheblich verbessert. Die wenigstens eine Aufnahme zur Befestigung eines lösbar anordbaren Tragelementes erlaubt eine einfache Montage des Tragelementes, insbesondere ohne Inanspruchnahme zusätzlicher Werkzeuge oder besonderer Vorrichtungen. Durch das lösbar anordbare Tragelement wird ein einfaches Tragen des Akkumulators ermöglicht. Darüber hinaus werden durch das lösbar anordbare Tragelement Beeinträchtigungen und Reduzierungen der Bedruckungsfläche des Deckels des Akkumulators weitestgehend verhindert, da zum einen das Tragelement vom Akkumulator überaus einfach wieder entfernt werden kann, beispielsweise nach dem Einbau in ein Kraftfahrzeug, und das Tragelement so auch für weitere Akkumulatoren verwendet werden kann, so daß die zur Verfügung stehende Bedruckungsfläche in keinster Weise beeinträchtigt bzw. reduziert wird. Zum anderen kann das Tragelement so am Akkumulator angeordnet werden, daß eine möglichst geringe Beeinträchtigung bzw. Reduzierung der Bedruckungsfläche des Deckels gegeben ist. Schließlich kann das lösbar anordbare Tragelement für verschiedene unterschiedliche Akkumulatoren verwendet werden. So läßt sich beispielsweise das Tragelement nach Einbau eines Akkumulators in einem Kraftfahrzeug von diesem lösen und zum Transport eines anderen Akkumulators verwenden.

Gemäß einer vorteilhaften Ausgestaltung der Erfindung ist das Tragelement beweglich anordbar. Dadurch wird beispielsweise ein einfaches Tragen bzw. Heben des Akkumulators in bzw. aus verschiedenen Stellungen heraus ermöglicht. So kann ein mit dem erfindungsgemäßen Griffsystem ausgestatteter Akkumulator beispielsweise auch an schwer zugänglichen Stellen, beispielsweise Batteriekästen von Kraftfahrzeugen überaus einfach und leicht angeordnet bzw. entfernt werden. Vorteilhafter Weise ist das Tragelement schwenkbar anordbar. Dabei bildet die Aufnahme zur Befestigung des Tragelementes vorteilhafterweise die Drehachse.

In einer weiteren vorteilhaften Ausgestaltung der Erfindung weist das Tragelement wenigstens einen Griffbereich auf, der vorzugsweise ergonomisch geformt ist. Dadurch wird der Tragekomfort und die Handhabbarkeit des Akkumulators verbessert und insbesondere ein sicheres Tragen ermöglicht. Vorteilhafter Weise ist das Tragelement bügelförmig ausgebildet.

Gemäß einer weiteren besonders vorteilhaften Ausgestaltung der Erfindung weist das Tragelement ein im wesentlichen mit der Aufnahme korrespondierendes Befestigungselement auf. Dieses Befestigungselement kann sowohl direkt von dem Tragelement ausgebildet bzw. an diesem angeformt sein, als auch als ein am Tragelement anordbares zusätzliches Bauteil sein. In vorteilhafter Weise ist das Befestigungselement als zapfenförmiger Vorsprung ausgebildet.

Gemäß einer vorteilhaften Ausgestaltung der Erfindung ist die Aufnahme eine Öffnung, in die wenigstens ein Teil des Tragelementes zur Befestigung einsetzbar ist. In einer weiteren vorteilhaften Ausgestaltung der Erfindung ist die Aufnahme nutenförmig ausgebildet. In besonders vorteilhafter Weise weist die Aufnahme wenigstens eine Rastvorrichtung auf, die vorzugsweise als Überhöhung ausgebildet ist, beispielsweise als eine Überhöhung oder ein Vorsprung im Schenke eines Nutprofils.

Gemäß einer weiteren vorteilhaften Ausgestaltung der Erfindung ist die Aufnahme im Deckel des Akkumulators ausgebildet. Dadurch müssen lediglich die Gehäusedeckel neu ausgebildet werden und die bisher bekannten Akkumulatorengehäuse mit ihren standardisierten Maßen können weiterverwendet werden. Gemäß einer weiteren besonders vorteilhaften Ausgestaltung der Erfindung ist das erfindungsgemäße Griffsystem nachrüstbar, das heißt die erfindungsgemäße Befestigungsaufnahme und das Tragelement können nachträglich an Akkumulatoren angeordnet werden. Dazu kann beispielsweise die Aufnahme am Akkumulatorengehäuse angeklebt, angeschraubt, aufgesteckt oder sonstwie befestigt werden.

In vorteilhafter Weise weist das Griffsystem wenigstens ein Sicherungselement auf, um so ein unbeabsichtigtes Lösen des Tragelementes zu verhindern. Dieses Sicherungselement kann dabei vorteilhafterweise sowohl seitens der Aufnahme, als auch seitens des Tragelementes vorhanden sein. Vorteilhafterweise handelt es sich bei dem Sicherungselement um einen Verriegelungsnocken.

Gemäß einer weiteren vorteilhaften Ausgestaltung der Erfindung ist das angeordnete Tragelement in das Gehäuse durch Einklappen integrierbar, das heißt insbesondere, daß das Tragelement, beispielsweise bei Nichtgebrauch, so angeordnet ist, daß die Abmessungen des Akkumulatorengehäuses nebst Deckel im wesentlichen nicht verändert werden, also insbesondere das Tragelement nicht übersteht. Von weiterem Vorteil ist dabei, daß das Tragelement bei Nichtgebrauch die Handhabung des Akkumulators nicht stört, beispielsweise durch ein Überstehen und dergleichen, und darüber hinaus das Tragelement nicht verloren gehen kann. Gleichzeitig wird so eine Beeinträchtigung bzw. Reduzierung der Bedruckungsfläche weitestgehend verhindert.

Vorteilhafterweise ist das Tragelement gemäß einer weiteren besonders vorteilhaften Ausgestaltung der Erfindung nur knapp oberhalb der Ruhestellung einschiebbar bzw. entfernbar. Dadurch ist nur in einer bestimmten Stellung bzw. in einem bestimmten Stellungsbereich ein Entfernen bzw. Einschieben des Tragelementes möglich, womit ein weiterer Sicherheitsaspekt gegeben und erfüllt ist.

Gemäß einer weiteren besonders vorteilhaften Ausgestaltung der Erfindung sind wenigstens zwei Aufnahmen auf eine Mittelachse des Akkumulators angeordnet, so daß die Drehachse eines befestigten Tragelementes in der Mittelachse zu Liegen kommt. Dadurch wird beim Tragen eines im wesentlichen symmetrisch aufgebauten Akkumulators eine weitestgehende Ausbalancierung des Schwerpunktes des Akkumulators erzielt, die das Tragen desselben weiter vereinfacht und erleichtert.

Weitere Vorteile und Merkmale der Erfindung werden im folgenden anhand des in den Figuren dargestellten Ausführungsbeispiels näher erläutert. Dabei zeigen:
- Fig. 1: in einer teilweise geschnittenen Darstellung eine Draufsicht auf einen mit dem erfindungsgemäßen Griffsystem versehenen Akkumulator und
- Fig. 2: eine teilweise geschnittene Seitenansicht des Deckels des Akkumulators gemäß Fig. 1.

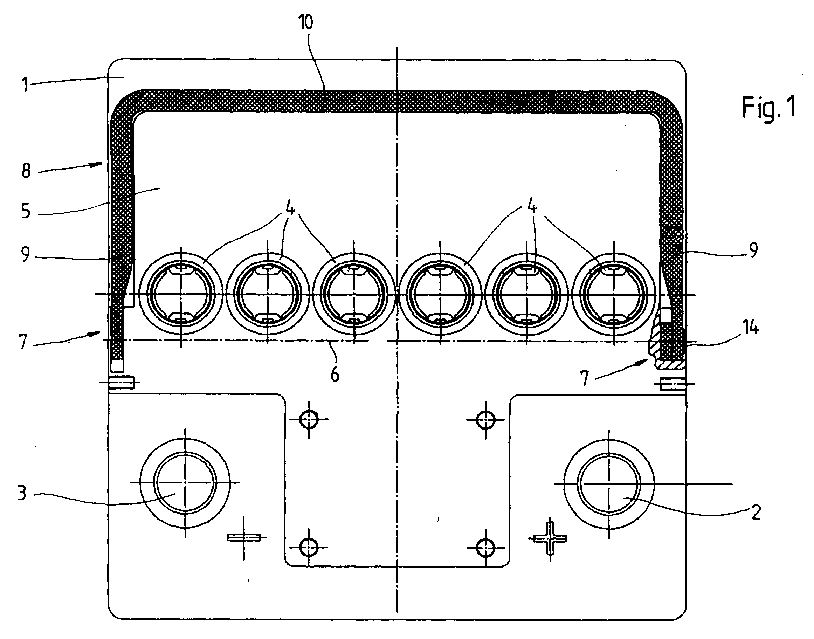

Fig. 1 zeigt in einer teilweise geschnittenen Darstellung eine Draufsicht auf einen Akkumulator. Zu sehen ist hier der Gehäusedeckel, welchen der Pluspol 2 und der Minuspol 3 durchragen. Desweiteren weist der Gehäusedeckel 1 die einzelnen Kammern des Akkumulators verschließende Verschlußstopfen 4 auf.

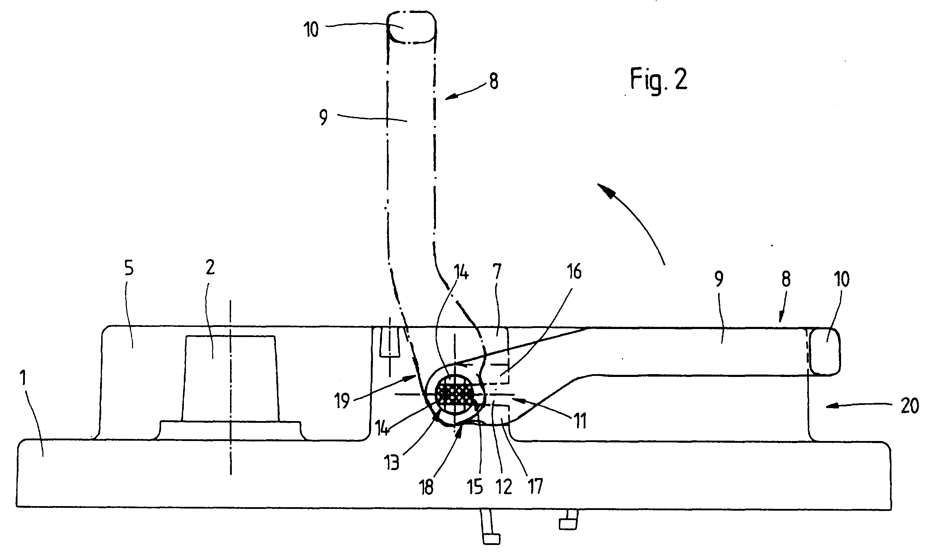

Wie anhand von Fig. 1 und 2 zu erkennen ist, weist der Gehäusedeckel 1 eine vom Rand des Gehäusedeckels 1 zurückversetzte, in der Draufsicht im wesentlichen T-förmig ausgebildete Ausformung 5 auf, die die Verschlußstopfen 4 aufnimmt, die Pole 2 und 3 in ihrer Höhe überragt und diese so weitestgehend vor Beschädigungen schützt.

An der Ausformung 5 des Gehäusedeckels 1 sind auf der gestrichelt eingezeichneten Deckelachse 6 jeweils an den Seiten der Ausformung 5 des Gehäusedeckels 1 eine Aufnahme 7 zur Befestigung eines lösbar anordbaren Tragelementes 8 angeordnet.

Wie anhand der Fig. 1 und 2 zu erkennen, weist das Tragelement 8 im wesentlichen die Form eines U-förmigen Bügels auf, wobei die freien Enden der Schenke 9 in den Aufnahmen 7 gelagert sind und die Basis einen Griffbereich 10 ausbildet.

Wie insbesondere in Fig. 2 dargestellt, ist die Aufnahme 7 als Nutprofil ausgebildet, wobei das Nutprofil auf der den Polen 2 und 3 gegenüberliegenden Seite des Gehäusedeckels 1 eine Öffnung 11 aufweist, die sich in Richtung der Pole 2 und 3 in Form eines Spaltes 12 konisch verjüngt und in ein kreisrunden Bereich 13 übergeht, wobei der Mittelpunkt des Kreises auf der in Fig. 1 strichpunktiert eingezeichneten Mittelachse 6 liegt.

In Fig. 2 ist neben der "Ruhestellung" des Tragelementes 8, wie sie auch in Fig. 1 dargestellt ist, gestrichelt die "Tragestellung" des Tragelementes 8 dargestellt. Das Tragelement 8 weist an den Enden seiner Schenke 9 jeweils einen zapfenförmig ausgebildeten Vorsprung 14 auf, dessen Querschnittsabmessungen zum einen der Öffnung 11 des Spaltes 12 und zum anderen dem Durchmesser des kreisrunden Bereiches 13 entsprechen.

Das Tragelement 8 wird in horizontaler Stellung von der polabgewandten Seite des Gehäusedeckels durch die Öffnung 11 und den Spalt 12 in den Bereich 13 der seitlichen Aufnahme 7 eingeschoben. Durch den konisch zulaufenden Spalt 12, dessen Öffnung 15 kleiner ist als die Öffnung 11, werden Rastvorrichtungen gebildet, so daß das Tragelement 8 in der strichpunktiert eingezeichneten Mittelachse 6 des Akkumulators zum Liegen kommt und durch Einrasten gegen ein Verschieben gesichert wird. Die den Spalt 12 bildenden Flanken 16 und 17 der Aufnahme 7 können leicht elastisch ausgebildet sein, so daß durch ein Ziehen des Tragelementes 8 am Griffbereich 10 in Richtung der polabgewandten Seite des Gehäusedeckels 1 des Akkumulators das Tragelement 8 wieder gelöst werden kann. Durch Schwenken des eingerasteten Tragelementes 8 in die Vertikale, wird das Tragelement 8 in die sogenannte "Tragestellung" gebracht. Damit das Tragelement 8 nicht über die "Tragestellung" hinausgeschwenkt werden kann, liegen die Schenkel 9 des Tragelementes 8 in der "Tragestellung" an einem Sperrbereich 19 der Ausformung 5 des Gehäusedeckels 1 an und sind so gegen ein Weiterschwenken gesichert.

Wie anhand der Figuren dargestellt, wird das Tragelement 8 im eingeklappten Zustand, das heißt in seiner "Ruhestellung", mit dem Gehäusedeckel 1 weitestgehend integriert, das heißt insbesondere, daß das Tragelement 8 nirgendwo über Abmessungen des Gehäusedeckels 1 übersteht. Darüber hinaus kann aufgrund der Ausgestaltung des Tragelementes 8 die seitens des Gehäusedeckels 1 zur Verfügung stehende Bedruckungsfläche nahezu vollständig genutzt werden. Desweiteren ist, wie anhand von Fig. 2 zu erkennen, der Griffbereich 10 des Tragelementes 8 auch im eingeklappten Zustand, das heißt in seiner "Ruhestellung" gut greifbar, da zwischen dem Gehäusedeckel 1 und dem Griffbereich 10 des Tragelementes 8 durch die Überhöhung 5 ein freier Raum 20 zum Ergreifen des Griffbereichs 10 des Tragelementes 8 gegeben ist.

### Bezugszeichenliste

- 1: Gehäusedeckel
- 2: Pluspol
- 3: Minuspol
- 4: Verschlußstopfen
- 5: Ausformung
- 6: Mittelachse
- 7: Aufnahme
- 8: Tragelement
- 9: Schenkel
- 10: Griffbereich
- 11: Öffnung
- 12: Spalt
- 13: Bereich
- 14: Vorsprung
- 15: Öffnung
- 16: Flanken
- 17: Flanken
- 18: Überhöhung
- 19: Sperrbereich
- 20: Greifraum

## Patentansprüche

1. Griffsystem für Akkumulatoren,
**dadurch gekennzeichnet,**
daß das Akkumulatorengehäuse wenigstens eine Aufnahme (7) zur Befestigung eines lösbar anordbaren Tragelementes (8) aufweist.

2. Griffsystem nach Anspruch 1, dadurch gekennzeichnet, daß das Tragelement (8) beweglich anordbar ist.

3. Griffsystem nach Anspruch 1 oder Anspruch 2, dadurch gekennzeichnet, daß das Tragelement (8) schwenkbar anordbar ist.

4. Griffsystem nach einem oder mehreren der vorhergehenden Ansprüche 1 bis 3, dadurch gekennzeichnet, daß das Tragelement (8) wenigstens einen Griffbereich (10) aufweist.

5. Griffsystem nach Anspruch 4, dadurch gekennzeichnet, daß der Griffbereich (10) ergonomisch geformt ist.

6. Griffsystem nach einem oder mehreren der Ansprüche 1 bis 5, dadurch gekennzeichnet, daß das Tragelement (8) bügelförmig ausgebildet ist.

7. Griffsystem nach einem oder mehreren der Ansprüche 1 bis 6, dadurch gekennzeichnet, daß das Tragelement (8) ein im wesentlichen mit der Aufnahme (7) korrespondierendes Befestigungselement aufweist.

8. Griffsystem nach Anspruch 7, dadurch gekennzeichnet, daß das Befestigungselement als zapfenförmiger Vorsprung (14) ausgebildet ist.

9. Griffsystem nach einem oder mehreren der Ansprüche 1 bis 8, dadurch gekennzeichnet, daß die Aufnahme eine Öffnung ist, in die wenigstens ein Teil des Tragelementes (8) zur Befestigung einsetzbar ist.

10. Griffsystem nach einem oder mehreren der Ansprüche 1 bis 9, dadurch gekennzeichnet, daß die Aufnahme nutenförmig ausgebildet ist.

11. Griffsystem nach einem oder mehreren der Ansprüche 1 bis 10, dadurch gekennzeichnet, daß die Aufnahme (7) wenigstens eine Rastvorrichtung aufweist.

12. Griffsystem nach Anspruch 11, dadurch gekennzeichnet, daß die Rastvorrichtung durch eine Überhöhung (18) im Gehäusedeckel (1) ausgebildet ist.

13. Griffsystem nach einem oder mehreren der Ansprüche 1 bis 12, dadurch gekennzeichnet, daß die Aufnahme (7) im Deckel (1) des Akkumulators ausgebildet ist.

14. Griffsystem nach einem oder mehreren der Ansprüche 1 bis 13, dadurch gekennzeichnet, daß das Griffsystem nachrüstbar ist.

15. Griffsystem nach einem oder mehreren der Ansprüche 1 bis 14, dadurch gekennzeichnet, daß das Tragelement (8) wenigstens ein Sicherungselement aufweist.

16. Griffsystem nach einem oder mehreren der Ansprüche 1 bis 15, dadurch gekennzeichnet, daß das Tragelement (8) durch Einklappen mit dem Gehäuse integrierbar ist.

17. Griffsystem nach einem oder mehreren der Ansprüche 1 bis 16, dadurch gekennzeichnet, daß das Tragelement (8) in einer Tragestellung nicht unbeabsichtigt entfernbar ist.
